(19) Europäisches Patentamt

European Patent Office

Office européen des brevets

(11) **EP 0 601 480 B1**

(12) **EUROPÄISCHE PATENTSCHRIFT**

(45) Veröffentlichungstag und Bekanntmachung des Hinweises auf die Patenterteilung:
**08.05.1996 Patentblatt 1996/19**

(51) Int. Cl.⁶: **B60T 8/18**, B60T 13/68

(21) Anmeldenummer: **93119428.6**

(22) Anmeldetag: **02.12.1993**

(54) **Automatisch lastabhängiger Bremskraftregeler für Nutzfahrzeuge**

Automatic load dependent brake force controller for commercial vehicle

Dispositif de contrôle automatique du freinage en fonction de la charge pour véhicule utilitaire

(84) Benannte Vertragsstaaten:
**DE FR GB IT SE**

(30) Priorität: **07.12.1992 DE 4241149**

(43) Veröffentlichungstag der Anmeldung:
**15.06.1994 Patentblatt 1994/24**

(73) Patentinhaber: **KNORR-BREMSE SYSTEME FÜR NUTZFAHRZEUGE GmbH**
**D-80809 München (DE)**

(72) Erfinder:
- **Vollmer, Otto**
  **D-80689 München (DE)**
- **Gerum, Eduard, Dr.**
  **D-83026 Rosenheim (DE)**
- **Fries, Ansgar**
  **D-80993 München (DE)**

(56) Entgegenhaltungen:
EP-A- 0 157 944    EP-A- 0 204 483
EP-A- 0 307 579    EP-A- 0 509 237
EP-A- 0 546 488

## Beschreibung

Die Erfindung betrifft einen automatisch lastabhängigen Bremskraftregler (ALB-Regler) für Nutzfahrzeuge.

Lastabhängig wirkende Bremskraftregler werden eingesetzt, um den Bremsdruck in Bremszylindern dem existierenden Beladungszustand eines mit Luftfederung versehenen oder mit hydraulischem Achsausgleich ausgestatteten Fahrzeugs anzupassen. Die Anpassung geschieht selbsttätig, wobei der von der Achsbelastung abhängige Steuerdruck die Höhe des vom Bremsventil zu den Bremszylindern geschickten Bremsdruckes über den Bremskraftregler einstellt. Die Regelgröße von Leerlast bis Vollast ist auf mechanischem Wege über ein sich auf einer Steuerkurve abstützendes Stellglied einstellbar. Es sind auch Konstruktionen bekannt, welche die Lastgröße pneumatisch auf das Stellglied einwirken lassen.

Der Aufbau derartiger Bremskraftregler ist im allgemeinen sehr aufwendig, wobei die Last des Fahrzeugs als einzig beeinflußende Stellgröße in die Regelung eingeht.

Aus der EP-A-0 307 579 ist eine einem Anhänger-Bremsventil und einem lastabhängigen Bremskraftregler nachgeschaltete, magnetgesteuerte Ventileinrichtung bekannt, welche ein Relaisventil mit zwei diesem vorgeschalteten Magnetventilen aufweist. Die Steuerung der Magnetventile ist für Antiblockierzwecke vorgesehen.

Davon ausgehend besteht die Aufgabe der Erfindung darin, einen automatisch lastabhängig wirkenden Bremskraftregler für Nutzfahrzeuge zu schaffen, welcher in stärkerem Maße den bei neuzeitlichen Bremsanlagen zur Verfügung stehenden Gegebenheiten der Ansteuerung mit einer Elektronik angepaßt werden kann. Im besonderen soll es möglich sein, den Bremskraftregler in Abhängigkeit des Steuerdruckes eines Druckgebers und eines elektrischen Lastsignals zu regeln, wobei auch bei Stromausfall ein zur Abbremsung ausreichendes Regelverhältnis zur Verfügung stehen soll.

Zur Lösung dieser Aufgabe dienen die Merkmale nach dem Kennzeichnungsteil des Patentanspruches 1.

Der automatisch lastabhängig wirkende Bremskraftregler in Form eines magnetventilgesteuerten Relaisventils ist von sehr einfachem Aufbau und vermittelt infolge seiner Relais-Bauart die Möglichkeit eines großvolumigen Durchsatzes zur Bremsbetätigung. Die dem Relaisventil am Druckeingang zugeordneten Einlaß- und Auslaßventile sind magnetgesteuert wobei zusätzlich am Druckeingang des Relaisventils ein als E/P-Wandler ausgebildeter Drucksensor das dem Steuerdruck entsprechende Signal für die Ansteuerungselektronik vermittelt und im weiteren wenigstens ein Lastsignal durch die Ansteuerungselektronik zum Zwecke der Ansteuerung der Magnetventile verarbeitet wird.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.

Fig.1    ist eine schematische Darstellung des erfindungsgemäßen Bremskraftreglers in seiner Lösestellung; und

Fig.2    gibt ein Funktionsdiagramm des Bremskraftreglers nach Fig.1 wieder.

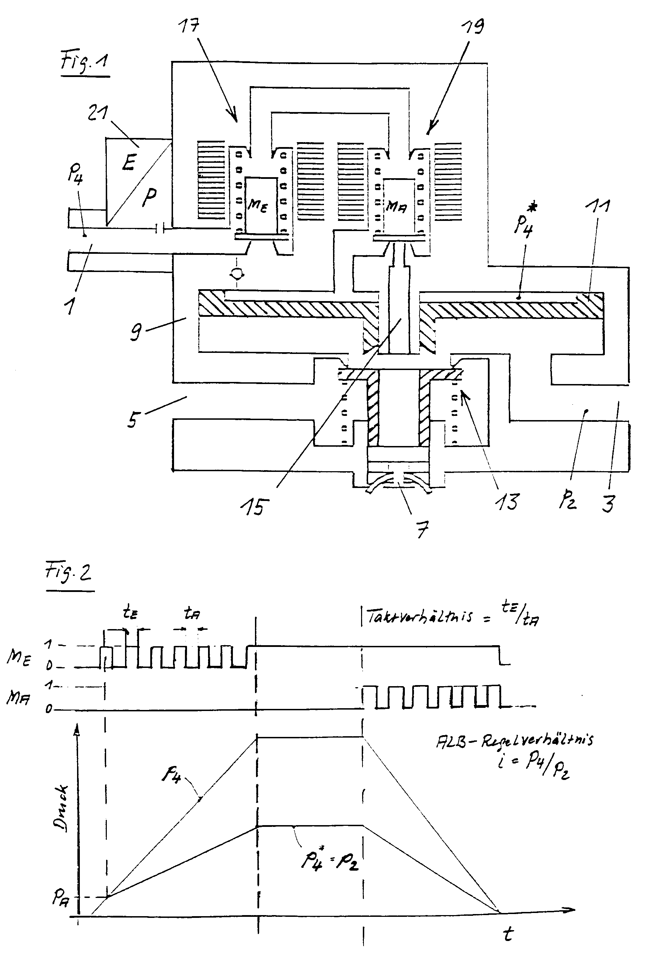

In Fig.1 der Zeichnung ist ein erfindungsgemäßer Bremskraftregler als automatisch lastabhängig wirkender Regler (ALB-Regler) wiedergegeben, welcher einen Eingang 1, einen Ausgang 3, einen Anschluß 5 für Vorratsdruckluft und einen Entlüftungsanschluß 7 aufweist. Im Gehäuse 9 des Relaisventils befindet sich in bekannter Weise ein Relaiskolben 11, ein Einlaß- und Auslaßventil 13 und ein Entlüftungskanal 15, welcher in der Entlüftungsposition des Einlaß- und Auslaßventils an den Entlüftungsanschluß 7 angeschlossen ist. Im Inneren des Gehäuses 9, vorzugsweise baulich integriert mit dem Relaisventil, sind des weiteren ein Einlaßmagnetventil 17 und ein Auslaßmagnetventil 19 vorgesehen. Beide Ventile befinden sich in Reihenschaltung in einer Verbindung zum Eingang 1 des Relaisventils. Relaisventile dieses grundsätzlichen Aufbaues sind an sich bekannt, weshalb sich eine ins einzelne gehende Beschreibung der Funktion eines derartigen Relaisventils erübrigt.

Das als ALB-Regler wirkende Relaisventil nach der Erfindung weist an dem den Steuerdruck $p_4$ eines Druckgebers führenden Eingang 1 einen Drucksensor 21 auf, welcher als E/P-Wandler ausgebildet ist, derart, daß der am Sensor zur Wirkung gelangende Steuerdruck ein elektrisches Signal erzeugt, wodurch der momentane Steuerdruck $P_4$ als auch eine momentane Druckänderung $p_4^{\cdot}$ ableitbar sind. Der Drucksensor 21 kann am Eingang 1 integriert oder an diesem eingeschraubt sein.

Die elektrischen Signale des Drucksensors gehen in die Ansteuerungselektronik (nicht dargestellt) der Bremsanlage des Nutzfahrzeugs ein, desgleichen wenigstens ein weiteres Signal in Form eines elektrischen Lastsignals (U oder I). Als weiteres Signal zur Beeinflussung des ausgesteuerten Bremsdruckes zum Zwecke der Verschleißoptimierung können Verschleißsignale in die Ansteuerungselektronik eingehen, des weiteren Signale für die Raddrehzahldifferenz der zu überwachenden Räder des Nutzfahrzeugs etc. Die Ansteuerungselektronik regelt den Steuerdruck $p_4$, welcher nach Maßgabe des in die Elektronik eingehenden Drucksignals und wenigstens eines Lastsignals in den modifizierten Steuerdruck $p_4^{\cdot}$ umgeformt wird. Zu diesem Zweck sind die beiden Magnetventile, d.h. das Einlaßmagnetventil 17 und das Auslaßmagnetventil 19, vorgesehen.

Fig.1 des Bremskraftreglers gibt die Lösestellung desselben wieder, d.h. sowohl der Steuerdruck bzw. modifizierte Steuerdruck und der ausgesteuerte Druck $p_2$ besitzen den Wert 0. Diese Lösestellung entspricht der Fahrstellung des Fahrzeugs. Ausgehend von der vorerwähnten Lösestellung wird zum Zwecke des Abbremsens des Fahrzeugs das Belüften mittels eines (nicht dargestellten), an den Eingang 1 angeschlossenen Druckgebers vollzogen. Das Belüften bei steigendem Steuerdruck geschieht getaktet in der aus Fig.2 der Zeichnung ersichtlichen Art, derart, daß ausgehend vom Ansprechdruck $p_A$ der ausgesteuerte Druck $p_2$ mit flacherer Steigung erzeugt wird. Da die Flächenverhältnisse im dargestellten Ausführungsbeispiel auf beiden Seiten des Relaiskolbens 11 gleich sind, entspricht der ausgesteuerte Druck $p_2$ im wesentlichen dem modifizierten Steuerdruck $p_4^*$. Beim Belüften ist das Einlaßmagnetventil 17 getaktet bestromt, während das Auslaßmagnetventil 19 stromlos ist. Der ausgesteuerte Druck $p_2$ entspricht dem Wert $p_4/i$, wobei i dem Regelverhältnis des Relaisventils, also dem Wert $p_4/p_2$ entspricht. Während in der Lösestellung des Relaisventils keine Drucksignale und folglich auch keine momentane Druckänderung vom Drucksensor ausgehen, erzeugt dieser beim Belüften Signale für den momentanen Steuerdruck $p_4$ und für die momentane Druckänderung (Druckanstieg) $p_4^*$.

Dem Belüften folgt die Funktion "Druckhalten", bei welcher keine Druckänderung, jedoch ein absoluter Steuerdruck $p_4$ in Form des Haltedrucks $P_{4H}$ vorliegt. Das Einlaßmagnetventil ist kontinuierlich bestromt, während das Auslaßmagnetventil nach wie vor stromlos ist.

Ausgehend von der vorgenannten Position erfolgt zum Zwecke der Bremsenfreigabe das "Entlüften" des Relaisventils mit fallendem Steuerdruck $p_4$, demgemäß mit momentaner Druckänderung von - $p_4^*$, wobei nunmehr bei bestromtem, kontinuierlich geschlossenem Einlaßmagnetventil 17 das Auslaßmagnetventil 19 getaktet geregelt wird, wie der dritte Funktionsabschnitt in Fig.2 der Zeichnung wiedergibt. Der Steuerdruck $p_4$ nähert sich zusammen mit dem modifizierten Steuerdruck $p_4^*$ bzw. dem entsprechenden ausgesteuerten Druck $p_2$ den Wert 0, so daß wieder die Lösestellung des Relaisventils, wie in Fig.1 dargestellt, erreicht ist.

Wie vorstehend erläutert ist, bestimmt die elektronische Steuereinheit, also die Ansteuerungselektronik für die Magnetventile das jeweils erforderliche Taktverhältnis $t_E/t_A$; der Steuereinheit stehen dabei im wesentlichen die folgenden Informationen/elektrische Signale für die Auswertung zur Verfügung:

1. Das Signal über den Beladungszustand des Fahrzeuges, beispielsweise von einem Drucksensor, der den Druck im Luftfederbalg eines luftgefederten Fahrzeuges mißt;

2. falls Verschleißsensoren installiert sind, ein Signal über den Belagverschleiß an den überwachten Bremsbelägen;

3. der momentan herrschende Steuerdruck $p_4$ am Eingang 1 des ALB-Reglers;

4. ferner der Druckgradient $p_4^*$ des Steuerdruckes (Eingangsdruckes);

5. die Raddrehzahlen der überwachten Achsen.

Grundsätzlich sind wenigstens das elektrische Signal für den momentan herrschenden Steuerdruck $p_4$ am ALB-Regler und das Signal über den Beladungszustand des Fahrzeugs erforderlich, um die automatisch lastabhängige Beeinflussung zu erstellen. Für die Berechnung des modifizierten Steuerdruckes $p_4^*$ sind neben den vorgenannten Signalen folgende Bestimmungsgrößen bekannt:
die fahrzeugspezifischen Daten zur Ermittlung des Regelverhältnisses $i = p_4/p_2$, ferner das genaue Steuervolumen im ALB-Regler, die Querschnitte (Drosseln) und schließlich die Durchflußparameter, die empirisch ermittelbar sind.

Neben der softwareseitigen Beeinflussung der Reglerfunktionen, d.h. der Anpassung der Funktion des ALB-Reglers an die unterschiedlichen fahrzeugspezifischen Daten, kann die Veränderung des Regelverhältnisses auch bewerkstelligt werden durch ein veränderbares Zusatzvolumen, das mit dem den modifizierten Steuerdruck führenden Steuerraum in Verbindung steht, und durch eine einstellbare Drossel am Ein- oder Ausgang des Steuerraumes.

Es ist auch denkbar die Software des ALB-Reglers so auszubilden, daß dieser zusätzlich die ABS-Funktion der Bremsanlage übernimmt. Dadurch würden die bislang verwendeten ABS-Drucksteuerventile eingespart werden.

Unter Ausnutzung der bereits vorhandenen ABS-Komponenten, z.B. Drehzahlsensoren, und Softwareerweiterung kann mit geringem Aufwand die beladungsangepaßte Bremsdruckverteilung weiter optimiert und können toleranzbedingte Regelabweichungen kompensiert werden.

Im wesentlichen besteht das Verfahren darin, daß die Raddrehzahlen an den überwachten Achsen miteinander verglichen werden. Wird eine bestimmte Raddrehzahldifferenz-Schwelle überschritten, löst der elektrisch angesteuerte ALB-Regler eine Bremsdruckreduzierung an der betroffenen Achse aus. Diese Optimierungsroutine sollte vorzugsweise unterhalb der Blockiergrenze arbeiten, also in einem Schlupfbereich, in den das ABS unwirksam ist.

Die Anforderungen an die Regelung dürften im Vergleich zu ABS wesentlich geringer sein, da es genügt, in größeren Zeitabständen einen groben Raddrehzahl vergleich vorzunehmen. Bei Überschreiten der vorgegebenen Differenzschwelle erfolgt ein sog. "Nachführen" des Bremsdruckes.

Bei einem lernfähigen System können die aus mehreren Bremsungen ermittelten Daten ausgewertet und in der Steuereinheit hinterlegt werden.

Das Verfahren hat den großen Vorteil, daß Regelabweichungen, bedingt durch Toleranzen der verwendeten Komponenten und physikalisch bedingte Streuungen, weitgehend eliminiert werden. Das bedeutet aber auch, daß kostengünstigere Bauelemente mit geringerer Genauigkeit zum Einsatz kommen können, z.B. Drucksensoren.

Die Toleranzen sollten vorzugsweise so gelegt werden, daß theoretisch alle Abweichungen letztlich zur Aussteuerung eines höheren Bremsdruckes am ALB-Regler führen. Dieses "Übersteuern" führt wegen des größeren Schlupfes an der lastabhängig geregelten Achse (Überschreitung der Raddrehzahldifferenz-Schwelle) zum Ansprechen der o.g. Optimierungsroutine und in der Folge zur Reduzierung des Bremsdruckes auf den gewünschten optimalen Wert.

**Bezugszeichenliste**

1        Eingang
3        Ausgang
5        Anschluß
7        Entlüftungsanschluß
9        Gehäuse
11       Relaiskolben
13       Einlaß- und Auslaßventil
15       Entlüftungskanal
17       Einlaßmagnetventil
19       Auslaßmagnetventil
21       Drucksensor

**Patentansprüche**

1.  Magnetgesteuerte Ventileinrichtung, insbesondere für Druckluftbremsanlagen von Nutzfahrzeugen, mit einem einem Druckgeber nachgeschalteten, an einen Verbraucher angeschlossenen Relaisventil, in dessen Steuerleitung in Reihe ein Einlaßmagnetventil (17) und ein Auslaßmagnetventil (19) angeordnet sind, **gekennzeichnet durch** folgende Merkmale:

    a) dem Relaisventil vorgeschaltet ist in der Steuerleitung ein Drucksensor zur Erzeugung eines elektrischen Drucksignals vorgesehen; und
    b) die Ein- und Auslaßmagnetventile (17, 19) sind nach Maßgabe des elektrischen Drucksignals und wenigstens eines elektrischen Lastsignals durch eine die Signale verarbeitende Ansteuerungselektronik regelbar.

2.  Ventileinrichtung nach Anspruch 1, **dadurch gekennzeichnet**, daß am Steuereingang des Relaisventils ein als E/P-Wandler ausgebildeter Drucksensor (21) zur Erzeugung des Drucksignals angeordnet ist.

3.  Ventileinrichtung nach Anspruch 2, **dadurch gekennzeichnet**, daß der Drucksensor (21) im Steueranschluß des Relaisventils integriert oder eingeschraubt ist.

4.  Ventileinrichtung nach einem der vorangehenden Ansprüche, **dadurch gekennzeichnet**, daß dieser bei Stromausfall oder defektbedingter Abschaltung der Ansteuerungselektronik als Relaisventil mit einem der Vollaststellung entsprechenden Regelverhältnis i = 1:1 wirkt.

5.  Ventileinrichtung nach einem der vorangehenden Ansprüche, **dadurch gekennzeichnet**, daß das Relaisventil derart ansteuerbar ist, daß die beladungsabhängige Reduzierung des Bremsdruckes im unteren Druckbereich entsprechend einem Anlegedruck aufhebbar ist.

6.  Ventileinrichtung nach einem der vorangehenden Ansprüche, **dadurch gekennzeichnet**, daß die elektronische Steuereinheit durch Verschleißsensoren an überwachten Bremsbelägen des Nutzfahrzeuges gespeist ist, derart, daß nach Auswertung der Signale das Druckniveau des ausgesteuerten Bremsdruckes am Regler nach Maßgabe der Verschleißwerte um einen bestimmten Betrag absenkbar oder anhebbar ist.

7.  Ventileinrichtung nach einem der vorangehenden Ansprüche, **dadurch gekennzeichnet**, daß zur Veränderung des Regelverhältnisses des Reglers dessen Steuerraum mit einem veränderbaren Zusatzvolumen in Verbindung steht.

8.  Ventileinrichtung nach einem der vorangehenden Ansprüche, **dadurch gekennzeichnet**, daß zur Veränderung des Regelverhältnisses des Reglers eine einstellbare Drossel am Ein- oder Ausgang des Steuerraums angeordnet ist.

9.  Ventileinrichtung nach einem der vorangehenden Ansprüche, **dadurch gekennzeichnet**, daß die durch den Regler erzielbare, beladungsangepaßte Bremsdruckverteilung unter Ausnützung bereits vorhandener ABS-Komponenten, z.B. Drehzahlsensoren und/oder zusätzlicher Softwareerweiterung weiter optimierbar ist, wobei toleranzbedingte Regelabweichungen kompensierbar sind.

10. Ventileinrichtung nach Anspruch 9, **dadurch gekennzeichnet**, daß der Regler eine achsbezogene Bremsdruckreduzierung nach Maßgabe des Überschreitens einer bestimmten Raddrehzahldifferenz-Schwelle auslöst.

11. Ventileinrichtung nach Anspruch 10, **dadurch gekennzeichnet**, daß die nach Maßgabe der Raddrehzahldifferenz erfolgende Optimierung unterhalb der Blockiergrenze des Fahrzeuges wirkt, d.h. in einem Schlupfbereich, in dem das ABS des Fahrzeuges unwirksam ist.

## Claims

1. Magnetically-controlled valve device, in particular for compressed air brake installations in commercial vehicles, having a relay valve connected downstream of a pressure transducer and connected to a load, in the control line of which valve there are arranged in series a magnetic inlet valve (17) and a magnetic outlet valve (19), characterised by the following features:

    a) connected upstream of the relay valve there is provided in the control line a pressure sensor for producing an electrical pressure signal; and
    b) the magnetic inlet and outlet valves (17, 19) can be controlled in accordance with the electrical pressure signal and at least one electrical load signal by means of control electronics processing the signals.

2. Valve device according to claim 1, characterised in that at the control input of the relay valve there is arranged a pressure sensor (21) constructed as an E/P transducer to produce the pressure signal.

3. Valve device according to claim 2, characterised in that the pressure sensor (21) is integrated or screwed in the control terminal of the relay valve.

4. Valve device according to one of the preceding claims, characterized in that in the case of power failure or a defective disconnection of the control electronics this valve device acts as a relay valve with a control ratio i = 1:1, corresponding to the full load setting.

5. Valve device according to one of the preceding claims, characterised in that the relay valve can be controlled in such a way that the load-dependent reduction in the brake pressure in the lower pressure range can be counteracted in accordance with an applied pressure.

6. Valve device according to one of the preceding claims, characterised in that the electronic control unit is fed by wear sensors on monitored brake linings in the commercial vehicle in such a way that after evaluation of the signals the pressure level of the output brake pressure at the regulator can be lowered or raised by a specific amount in accordance with the wear values.

7. Valve device according to one of the preceding claims, characterised in that in order to change the control ratio of the regulator its control chamber is connected to a variable additional volume.

8. Valve device according to one of the preceding claims, characterised in that in order to change the control ratio of the regulator an adjustable throttle is disposed at the inlet or outlet of the control chamber.

9. Valve device according to one of the preceding claims, characterised in that the brake pressure distribution obtainable by the regulator and adapted to the load can be further optimized using already available ABS components, e.g. rotary speed sensors and/or additional software expansion, whereupon control deviations inherent in the tolerances can be compensated for.

10. Valve device according to claim 9, characterised in that the regulator triggers an axle-specific brake pressure reduction in accordance with the degree to which a specific rotary wheel speed differential threshold is exceeded.

11. Valve device according to claim 10, characterised in that the optimisation produced in accordance with the rotary wheel speed differential works below the blocking limit of the vehicle, i.e. in a slip range in which the ABS of the vehicle is ineffective.

## Revendications

1. Dispositif de soupapes à commande magnétique, notamment pour des installations de freins à air comprimé de véhicules utilitaires, comportant une soupape relais montée en aval d'un générateur de pression et raccordée à un organe utilisateur, et dans la canalisation de commande de laquelle sont disposées en série une soupape magnétique d'entrée (17) et une soupape magnétique de sortie (19), caractérisé par les caractéristiques suivantes :

    a) un capteur de pression servit à produire un signai électrique de pression est monté dans la canalisation de commande, en amont de la soupape relais; et
    b) les soupapes magnétiques d'entrée et de sortie (17,19) peuvent être réglées, en fonction du signal électrique de pression et d'au moins a signal électrique de charge, par un système électronique de commande traitant les signaux.

2. Dispositif de soupapes selon la revendication 1, caractérisé en ce qu'un capteur de pression (21), réalisé sous la forme d'un convertisseur E/P et destiné à produire le signal de pression, est disposé à l'entrée de commande de la soupape relais.

3. Dispositif de soupapes selon la revendication 2, caractérisé en ce que le capteur de pression (21) est intégré ou vissé dis le raccord de commande de la soupape relais.

4. Dispositif de soupapes selon l'une des revendications précédentes, caractérisé en ce que dans le cas d'une panne de courant ou d'une mise hors service, due à un défaut, du système électronique de commande, ce dispositif agit en tant que soupape relais avec un rapport de régulation i = 1:1 qui correspond à la position de pleine charge.

5. Dispositif de soupapes selon l'une des revendications précédentes, caractérisé en ce que la soupape relais peut être commandée de telle sorte que la réduction, qui dépend de la charge, de la pression de freinage, puisse être supprimée, conformément à une pression d'application, dans la plage des faibles pressions.

6. Dispositif de soupapes selon l'une des revendications précédentes, caractérisé en ce que l'unité de commande électronique est alimentée par des détecteurs d'usure montés sur des garnitures de frein contrôlées du véhicule utilitaire, de telle sorte qù'après évaluation des signaux, le niveau de la pression de freinage commandée dans le régulateur puisse être abaissé ou élevé d'une valeur déterminée, en fonction des valeurs d'usure.

7. Dispositif de soupapes selon l'une des revendications précédentes, caractérisé en ce que pour la modification du rapport de régulation du dernier, la chambre de commande de ce dernier est reliée à un volume additionnel variable.

8. Dispositif de soupapes selon l'une des revendications précédentes, caractérisé en ce que pour la modification du rapport de régulation du régulateur, un étranglement réglable est monté à l'entrée ou à la sortie de la chambre de commande.

9. Dispositif de soupapes selon l'une des revendications précédentes, caractérisé en ce que la répartition de la pression de freinage adaptée à la charge, qui peut être obtenue au moyen du régulateur, peut être davantage optimisée moyennant l'utilisation de composants ABS déjà existants, par exemple de capteurs de vitesse de rotation et/ou d'une extension supplémentaire du logiciel, des écarts de régulation dûs aux tolérances pouvant ainsi être compensés.

10. Dispositif de soupapes selon la revendication 9, caractérisé en ce que le régulateur déclenche une réduction de la pression de freinage, rapportée à l'essieu, en fonction du dépassement d'un seuil déterminé de la différence des vitesses de rotation des roues.

11. Dispositif de soupapes selon la revendication 10, caractérisé en ce que l'optimisation, qui s'effectue en fonction de la différence des vitesses de rotation des roues, intervient au-dessous de la limite de blocage du véhicule, c'est-à-dire dans une zone de glissement, dans laquelle le système ABS du véhicule est inactif.

Fig. 1

Fig. 2

$Taktverhältnis = t_E/t_A$

$ALB - Regelverhältnis$
$i = P_4/P_2$

$P_4^* = P_2$

7